# EUROPEAN PATENT SPECIFICATION

(11) **EP 1 934 025 B1**
(45) Date of publication and mention of the grant of the patent: **24.10.2012**
(21) Application number: 06700068.7
(22) Date of filing: 05.01.2006
(51) Int. Cl.: B27K 3/50, A01N 37/06, A01N 37/10, A01N 37/02, C09K 21/06, B27K 5/00

(54) **COMPOSITION FOR TREATING WOOD, METHOD FOR TREATMENT OF WOOD AND WOOD PRODUCT**
ZUSAMMENSETZUNG ZUR BEHANDLUNG VON HOLZ, VERFAHREN ZUR BEHANDLUNG VON HOLZ UND HOLZPRODUKT
PRÉPARATION POUR LE TRAITEMENT DU BOIS, MÉTHODE DE TRAITEMENT DU BOIS ET PRODUIT EN BOIS

(30) Priority: 10.01.2005 FI 20050023
(43) Date of publication of application: 25.06.2008
(73) Proprietor: BT Wood Oy, 90100 Oulu (FI)
(72) Inventor: AITTA, Eero, FI-91410 Jokirinne (FI); SEPPI, Pekka, FI-90520 Oulu (FI); KUKKONEN, Jari, FI-90800 Oulu (FI); NISSINEN, Timo, FI-33730 Tampere (FI)
(74) Representative: Hakola, Unto Tapani
(86) International application number: PCT/FI2006/050012
(87) International publication number: WO 2006/072672

(56) References cited:
- EP-A1- 0 287 805
- EP-A1- 0 365 825
- EP-A1- 1 201 140
- WO-A1-02/064336
- WO-A1-03/002318
- US-A- 5 670 160
- US-A1- 2004 261 961

## Description

The invention relates to a method for treatment of wood for the purpose of improving primarily the preservability and other properties of wood products.

In this context, the wood, for which the composition is intended, refers to all materials and products that contain wood material, including raw timber, sawn timber, wooden building materials and elements, and various finished wood products (round logs, all sawn timber, such as boards, planks and laths, elements with a large surface area, such as plates, panels, blocks, wall elements, etc., furniture, outdoor furniture, and other wooden objects). The wood to be treated may also be present in fixed structures, particularly outdoors (wooden buildings, fences, racks, poles, bridges, piers, etc.). Wood also refers to a converted wood product that contains the original structure of wood (for example, wood material that has been ground or chipped and reworked).

In Europe, raw wood material is expensive, and raising the degree of processing is widely seen as the only choice in the field to secure the growth or even maintenance of the industry at the present level. The inhibition of biological decay of wood and the improvement of fire resistance and water resistance of wood are known to be areas in which the degree of wood processing should be particularly increased. For example, fire safety is a significant barrier to wood construction. Changes in dimensions and cracking of wood are also significant aspects in this respect.

Wood microbes are often classified into two groups according to their enzymatic activity and decomposing capacity. Group 1 consists of fungi that utilize the contents of a dead vegetable cell but do not decompose the lignified cell wall of a wood cell. These include surface moulds and blue stain fungi. Group 2 includes microbes that utilize the lignified cell wall. The most effective decomposers are brown and white rot fungi, but also actinobacteria and soft rot fungi are capable of decomposing the lignified cell wall of wood cells (Hatakka, Annele, 2002. Chapter 6.4.1. Puun lahoaminen, pp. 480-488 in Salkinoja-Salonen et al. (eds.), Mikrobiologian perusteita, Gummerus, Jyväskylä, ISBN 951-45-9502-5).

Publication WO 03/002318 discloses the uses of potassium formate and calcium formate in aqueous solutions for preserving wood, particularly against wood-rotting fungi and termites. Also, document WO 03/088745 discloses the use of solutions of various formates (salts of formic acid) for treating porous materials, such as wood, for the purpose of inhibiting the growth of mould and fungi from spores. Publication US 6,652,921 discloses a method, in which wood is pre-treated with an organic acid that is preferably citric acid, fumaric acid or lactic acid, the list also including formic acid as a less advantageous alternative. After the pretreatment, the wood is dried and finally treated with sorbic acid or a salt of the same. The concentration of the organic acid in the pretreatment solution is preferably from 1.0 to 5.0 wt-%. The aim is to provide the wood with a constant "depot" of poorly soluble sorbic acid by impregnating the wood, pretreated with the acid, with a sorbate, for example potassium sorbate. The treatment steps may also be arranged in a reverse order, but also in that case, the treatment is characterized by drying between the steps.

Publication EP 1 361 938 B discloses an impregnating agent that is based on a particular mixture of potassium diformate, which is a double salt of formic acid and potassium formate, with organic acids. The aqueous solution of potassium diformate is acidic as such.

Potassium formate is known for its effect of inhibiting the growth of wood-rotting fungi and for its fire-retarding effect, when its aqueous solution is used for the treatment of wood. Its advantage is non-toxicity compared with, for example, conventional CCA (chromated copper arsenite) impregnation methods. Potassium formate is also biodegradable, and wood treated with it can be, for example, disposed of without problems. One advantage of potassium formate is its good solubility in water (one of the best water-soluble salts), but a disadvantage due to this is its easy leaching from the wood. Another disadvantage is that even though it works well against wood-rotting fungi and insects, it does not give the best result in the control of mould fungi thriving on the surface of wood.

The use of acids in the preservation of wood (for example in the way known from the publications US 6,652,921 and EP 1 361 938 B) has been found to have the disadvantage that in time, the acidic conditions have a harmful effect on the original structure of the wood material.

It is an aim of the invention to provide a composition for treating wood that
- is safe (not harmful),
- is absorbed by or penetrates well all different kinds of wood materials, but remains in the wood substantially without leaching out,
- preserves the wood both against mould and against wood-rotting fungi and blue stain fungi,
- protects the wood from dimensional changes and cracking,
- improves the fire resistance of the wood, and
- is not harmful for the structure of the wood after the treatment, even in long-term use.

To achieve the aims of the invention, the method is primarily characterized in what will be presented in the characterizing part of the appended claim 1. The composition used in the method according to the invention contains formate as a first salt and sorbate and/or benzoate as a second salt. Such a composition inhibits the growth of surface mould and blue stain fungi as well as the decay of wood. It also keeps off pest insects and increases the fire resistance of the wood. Moreover, the composition inhibits dimensional changes in wood and the cracking of wood during storage and use. The aqueous solutions of the above-mentioned salts are neutral or slightly alkaline, which is beneficial for the treatment of the wood material.

When dissolved in an aqueous carrier, the treatment composition forms a fluid composition that can be entered at least partly in the wood by a variety of methods. In its simplest form, it is an aqueous solution of various salts. It can be absorbed in the wood to be treated throughout or in a certain depth from the surface, for example by impregnation, immersion, spraying, steaming (atomizing) or brushing. Thanks to the many alternatives, the treatment can be implemented in a suitable step in the processing of the wood, for example during the final drying of the wood. The physical properties (such as viscosity) of the composition may be adjusted according to the method and need of treatment. It is possible to heat the preservative composition according to the invention, and/or to use an elevated temperature in the process, which improves the absorption further. The use of negative pressure or overpressure, known from conventional CCA impregnation, also improves the absorption. In general, the composition used in the method according to the invention is suitable for use in all the conventional ways of impregnating wood, including pressure impregnation. However, the environmental safety of the composition offers many other possibilities which have been impossible to implement with more toxic compositions.

The treating composition used in the method according to the invention preferably contains auxiliary agents, such as magnesium, calcium, aluminium or silicate ions, or any mixture of these, which further improve the binding of the first salt, i.e. the formate, and the second salt, i.e. the sorbate and/or benzoate, to the wood material. In addition, the aluminium ion further reduces the absorption of moisture into the wood material and thereby improves the dimensional stability of the wood and reduces the cracking of the wood. For example, the combination of formate and aluminium provides a composition that preserves the wood well outdoors, the aluminium reducing the penetrability of water into the wood in this composition. Preferably, a combination of potassium formate and aluminium sulphate is used.

In the composition, the first main component, the formate salt, is a formate of a monovalent or divalent cation or aluminium. The mono- or divalent cations are selected from the group of alkali metals, alkali earths, ammonium, copper, and zinc. The cation of the formate may be one of the following: K, NH₄, Na, Cs, Ca, Mg, Al, Cu or Zn, or a mixture of these. If good penetrability is desired, an alkali metal salt or an ammonium salt is preferably used, wherein it is advantageous to use an auxiliary agent to bind the well-soluble formate to the structure of the wood when the wood dries after the treatment. On the other hand, if good stability without a need for auxiliary agents is aimed at, alkaline-earth formates, zinc or copper formate, or aluminium formate is used. In particular, magnesium formate remains well in wood as such.

Advantageously, the cation of the formate is one of the following: K, Na, Ca and Mg.

The sorbate salt and/or benzoate salt used in the same composition with the above-mentioned formate salt may contain the same cations as those mentioned above.

Furthermore, it is possible to use other salts of organic acids. In addition to the above-mentioned first salt and second salt, the same aqueous carrier may contain, as such an auxiliary salt, particularly salts of C2-C8 carboxylic acids, such as an acetate, a lactate, a citrate, an oxalate and a propionate, which act primarily in the way of the sorbate and the benzoate as auxiliary agents supplementing the effect of the formate. For example, it is possible to use an acetate, a lactate, a citrate, an oxalate and a propionate of the following cations: alkali metals, alkali earths, ammonium, aluminium, copper, and zinc. Mixtures of these auxiliary salts are also possible. The selection and dosage of the auxiliary salts are influenced by the use, and in the selection and the content one must take into account, for example, their characteristic smell which may come out at high concentrations, particularly in the case of propionates or acetates. The solubility of the salts must also be taken into account in the dosage (for example, oxalates), as must be done in the selection of all the anions and cations and their concentrations in the composition in general.

In particular, a part of the sorbate may be replaced with propionate.

The composition is prepared by dissolving the above-mentioned salts (a formate salt and a sorbate salt and/or a benzoate salt as well as one or more of the above-mentioned auxiliary salts) in water and possibly also adding other auxiliary agents and additives depending on the use of the composition, which will be discussed later on.

The first salt is a formate salt which is also effective against blue stain fungi. Similarly, it preserves the wood against termites, which is advantageous in countries where the termites cause damage in wooden structures.

Formate salts, as such, have an effect that augments the fire resistance of wood. Of particular advantage is potassium formate which effectively inhibits the burning of wood.

The content of potassium formate in the solution may be 1 to 70 wt-%, preferably 2 to 40 wt-%.

A part of the formate salt can be replaced, particularly with acetate.

The second salt in the composition is a sorbate salt and/or a benzoate salt. This concept also means that the sorbate salt and the benzoate salt may be present alone or together in a certain ratio. Both agents are effective against surface mould.

The sorbate salt or benzoate salt used is advantageously an alkali metal sorbate or benzoate. Advantageously, an alkali metal sorbate is used, possibly together with a benzoate and/or a propionate. In this case it is preferably potassium sorbate, whose content may be 1 to 50 wt-%, preferably 2 to 20 wt-%.

An advantageous composition containing an alkali metal formate and sorbate is one in which the formate is potassium formate in a content of 2 to 40 wt-% and in which the alkali metal sorbate is potassium sorbate in a content of 2 to 20 wt-%.

The fire resistance can be improved further, for example, by adding the following substances into the composition containing the formate salt and the sorbate salt and/or benzoate salt:
1) magnesium, calcium, aluminium or silicate ions, or mixtures of these;
2) known fire retarding chemicals based on phosphorus and nitrogen, such as, for example, diammonium hydrogen phosphate, monoammonium dihydrogen phosphate, ammonium polyphosphate, phosphonates, urea, or urea phosphate, or mixtures of these.

The composition may also contain a mixture of the above-mentioned substances of the categories 1 and 2 (or mixtures of these).

The total content of magnesium, aluminium and/or silicate ions is thus advantageously 0.1 to 20 wt-%.

An advantageous composition contains both A) an alkali metal formate and sorbate and B) magnesium ions. The alkali metal formate is thus preferably potassium formate, whose content may be 1 to 70 wt-%, preferably 2 to 40 wt-%, and the alkali metal sorbate is potassium sorbate, whose content may be 1 to 50 wt-%, preferably 2 to 20 wt-%. The magnesium ions originate preferably in magnesium sulphate, and the content of Mg ions may be 0.1 to 20 wt-%, preferably 0.1 to 5 wt-%.

The treatment composition used in the method according to the invention, based on a formate salt and a sorbate salt and/or a benzoate salt, may also contain rheological auxiliary agents, such as carboxymethyl cellulose (CMC), which - thanks to its adhesive property - binds the preservative composition to the surface of the product and inside the same. If there is little CMC, the composition can be used as an agent penetrating into the wood. With a higher CMC content, it is possible to obtain a composition to be brushed onto the surface of the wood for surface treatment. Furthermore, it is known that CMC can be used for controlling the deposition of e.g. pigments onto the roughness of the wood, if the composition is used as a brushable treatment composition that also affects the visual properties of wood. Other rheological auxiliary agents include, for example, natural polymers, such as xanthan, and polyacrylates.

The wood treatment composition used in the method according to the invention, containing a formate salt, can also be used against damage caused by insects, particularly termites. Against the termites, toxic agents have been conventionally used, for example the above-mentioned CCA, known from pressure impregnation, as well as zinc borate, ACZA (ammoniacal copper zinc arsenate) and CTL (tetrachloroisophthalonitrile).

Consequently, the composition used in the method according to the invention suits particularly well against surface moulds, blue stain fungi and wood-rotting fungi, and also for the inhibition of damage cause by termites, as it contains formate.

Another advantageous property that should be mentioned of the composition used in the method according to the invention is the fact that it does not contain heavy metals classified to be particularly hazardous on the basis of toxicity, such as chromium or arsene, which are known from compositions of prior art; nor does it contain lead, mercury or cadmium. However, it is possible that the composition contains heavy metal residues from the raw materials used in the preparation, for example from the water used as a carrier for the composition. However, the content of these is infinitesimal when compared with compositions in which heavy metals have been added as active agents. The composition used in the method according to the invention contains salts of natural organic acids which are harmless to the environment (formic acid, sorbic acid, benzoic acid), preferably together with alkali metals or alkali earths or ammonium. The above-mentioned salts of other organic acids used as auxiliary agents, "auxiliary salts", are also safe to use.

The composition used in the method according to the invention may also contain aluminium, copper or zinc ions, by means of which the preservability of wood materials can be made more efficient but which are much safer to use than the above-mentioned hazardous heavy metal compounds. To include copper and/or zinc ions, which increase the anti-fungal effect, in the composition, it is possible to use copper and/or zinc salts of formate, sorbate and/or benzoate, or, for example, copper sulphate or zinc sulphate. The aluminium can be included in the form of aluminium sulphate or aluminium formate (aluminium triformate).

Furthermore, the pH of the composition used in the method according to the invention is primarily neutral or slightly alkaline, because instead of acids it contains salts of formic acid and/or acetic acid and sorbic acid and/or benzoic acid, the pH being higher than 7, advantageously higher than 8, when measured directly from the solution. For example, strongly acidic wood-preserving or fire-retarding compositions easily damage the structure of wood in course of time. Similarly, they are harmful if metallic construction materials (for example, nails, screws) are used in connection with such wood, due to the susceptibility of rusting. In some cases, an acidic component may be added to adjust the pH to a value of 6 or more, which is still higher than the pH of known compositions based on acids. The pH is in the range from 6 to 12, advantageously in the range from 7 to 11, the ideal situation being in the range from 8 to 10, measured directly from the solution.

The treatment solution used in the method according to the invention may contain known buffer chemicals (for example borax, carbonate, phosphate, etc.) as needed. The content of the buffer chemical ranges from 0.001 to 5.0 wt-%.

The method for treating wood according to the invention comprises bringing the wood in contact with said composition. Depending on the physical properties of the composition, the result is impregnation of the wood to a certain depth, surface treatment of the wood, or a combination of these.

The action of the treatment solution used in the method according to the invention is based on the chemical modification of the wood with formate and sorbate and/or benzoate ions. Small-sized carboxylic ions (such as, for example, formate and sorbate and/or benzoate) penetrate into the wood and form corresponding salts in the wood. Together with particular binding agents, such as calcium, magnesium, aluminium and/or silicate, the carboxylic ions according to the invention inhibit the absorption of water and moisture, which are essential for the organisms that biologically decompose wood and also for all biological action, into the wood or into the cell system of the wood.

The invention is suitable for the treatment of both processed timber and raw timber, and the treatment can be given either at wood storage sites or in a separate processing mill for timber, wherein the treatment composition and the wood can be brought into contact in a variety of ways. Similarly, the invention is suitable for the preservation of stationary structures already erected, particularly outdoors, wherein primarily spraying and brushing of the surfaces can be used. It should be noted that thanks to the safety of the composition, it can be used for the treatment of erected wooden structures in their locations of use without particular safety measures.

The solution containing potassium formate can be stored in unheated rooms also during winter time, because it has good resistance to freezing, in the case of strong solutions down to a minimum of -50 degrees. Thanks to these properties, it is possible to prepare, for example, a solution that is more concentrated than the above-described ready-to-use solutions, i.e. a concentrate that is suitable for storage at cold temperatures below 0 degrees and which can be diluted before the use. In the preparation of such a concentrate, one should naturally take into account the solubility of the substances and in its storage recommendations the freezing point of the resulting solution.

The invention suits particularly well for treatment processes requiring good penetrability into wood, such as impregnation. The composition can be entered into the wood, for example, in the known pressure impregnation process, in which the wood is at first kept under negative pressure to remove water from its inside, after which the composition is brought into contact with the wood and its penetration into the wood is enhanced by overpressure.

The solution used in the method according to the invention may contain various additives, depending on the use. If the composition is to be used for surface treatment, colouring agents, such as organic colouring agents or pigments, may be added into it if the wood surface to be treated should also be given a visual change in the way of painting. In this case, for example CMC (carboxymethyl cellulose) can be used as an adhesive, which at the same time acts as a rheological auxiliary agent. The pigments and organic colouring agents are preferably free of heavy metals. For example, known iron oxide pigments can be used as the pigment. The physical properties of the compositions to be brushed onto the surfaces can also be selected on the basis of the use; in other words, it can be more viscose than the composition intended for impregnation, which should penetrate well into the wood. However, it should be noted that also when brushable compositions are used, some penetration of the active agents into the wood takes place (of the order of millimetres), also with viscose compositions.

The invention is also suitable for objects which are not completely made of wood but, for example, a combination of wood and another material. The requirement is that it is the wooden part of the object that is subjected to treatment.

Similarly, the invention is suitable for wood from different tree species, for example pine, which is conventionally treated with CCA, for example by pressure impregnation. However, the invention is particularly well suited for tight grained wood material which is difficult to impregnate with CCA, such as spruce, if the penetration properties of the composition are adjusted to be suitable. In this way, the composition whose efficiency is at least comparable to that of CCA but which is safer for the environment can be used to improve the preservation of such types of wood which have previously not been preservable in a proper way.

The invention makes it possible to treat wood materials in a light and cost-efficient way, and the treatment can be easily included in other present-day steps of wood treatment. The process may be one step in a processing line of timber or wooden objects comprising successive steps. The composition used in the method according to the invention is also pleasant to handle, because it does not emit strongly irritating odours.

In the following, practical examples will be given of methods how the treatment composition can be used for the treatment of wood and how the treatment can be integrated in a wood material processing line in mills for wood processing.

### 1) Pressure impregnation

A conventional method for entering great amounts of impregnation substance in wood, and thereby providing the most effective treatment by means of different steps (negative pressure and overpressure, elevated temperature). By this method, the best penetrability of compositions is obtained, and the wood can normally be impregnated to the core. The composition used in the invention has a very good penetrability, wherein it is possible to reduce the negative pressures/overpressures used in conventional CCA impregnation and thereby to improve the cost-effectiveness of the process. Also, a tighter-grained type of wood, such as spruce, can be pressure impregnated with the composition used in the invention, which has not been possible with conventionally used substances.

### 2) Immersion impregnation

The penetrability of the composition used in the invention is good, and in some cases, mere immersion impregnation is also possible. This method is simple but it requires separate immersion basins and is carried out in batch processes, like the pressure impregnation.

### 3) Spraying

The composition used in the invention can be sprayed onto the surface of wood, for example, in connection with the planing of sawn timber. In this way, preservation against microorganisms can be achieved during storage and delivery before a surface treatment (painting etc.) later on.

### 4) Painting or other surface treatment line

The composition used in the invention may also be added into the wood in connection with a painting or another surface treatment line. From a paint dosing tank, a wooden board can be impregnated with the solution under overpressure or negative pressure through a separate painting unit. Depending on the pressure and the speed of the line, relatively good penetrability and thereby a reasonable resistance to weather and fire can be achieved by this method.

### 5) Drying of the wood and the control of final moisture content

In the processing of timber in sawmills, it is more and more important that the final moisture content of the wood is suitable to prevent cracking and dimensional changes, as well as to prevent too good a substrate from forming for biological life. In connection with the drying, the tree often dries to a moisture content that is lower than desired. At the end, the moisture content can be adjusted, for example, by a technique based on spraying with water. In this step, it is very easy to add the composition used in the invention into the wood, wherein it is possible to eliminate cracking and dimensional changes due to the drying of wood. Furthermore, this method can be used to improve the fire resistance and to provide at least a short-term preservation against microorganisms.

In connection with the treatment methods according to points 1 to 4, however, it is important to dry the wood well (for example, at a temperature from 40 to 80 °C), wherein the extra water absorbed in the wood during the process can be removed and the moisture content can be stabilized to a desired final level.

In the following, the invention will be described in more detail by means of examples on the preservation of wood with the wood treatment composition usd in the method according to the invention. The examples are intended to illustrate and not to limit the invention.

In Examples 1 to 4, the following microorganisms will be used:
SURFACE MOULDS:
   Penicillium expansum
   Cladosporium cladosporioides
   Cladosporium sp.
   Alternaria alternata
BLUE STAIN FUNGI, mixed culture of blue stain fungi:
   Aureobacidium pullulans
   Ceratocystis pilifera
   Sclerophoma entoxylima
WOOD-ROTTING FUNGI:
   Poria vaillantii
   Coniophora cerebella
   Cloeophyllun trabeum
   Serpula lacrymans

### Example 1. Tests with pieces of wood on agar dishes

### SAMPLES

1. Water (zero test)
2. Solution 1 (reference solution 1)
   120 g/kg potassium formate + 24 g/kg Mg sulphate * 7H₂O + water pH 9 (measured directly from the solution)
3. Solution 2 (solution used in the invention)
   60 g/kg potassium formate + 60 g/kg potassium sorbate + 24 g/kg Mg sulphate * 7H₂O + water
   pH 9 (measured directly from the solution)
4. CCA impregnation liquid 2.2 wt-% (20 g/l = 2 wt-%) (reference solution 2)
   13.7 wt-% CuO
   34.2 wt-% CrO₃
   24.1 wt-% AsO₅
   28.0 wt-% H₂O

We investigated the capability of wood-preservative solutions to inhibit the growth of blue stain fungi on pieces of wood in agar dishes. The pieces of wood used as test substrates were immersed in the sample solutions to be tested.

### METHOD

The test substrates used were pieces of wood (pine) cut to the size of 3 x 2 x 0.5 cm. The pieces of wood were treated with the test solutions in the following way: The pieces of wood were immersed in the test solutions for 16 h, after which the pieces were dried at +50°C for 16 h. After this, the pieces were placed on rubber rings in malt agar dishes, and a suspension of spores of blue stain fungi was applied on them (by applying the filter paper method). Three parallel assays were made of each sample. The dishes were incubated for 9 weeks at room temperature on top of expanded polystyrene in a cooler box, whose bottom was covered with water to maintain humidity.

After the incubation, the growth of fungi on the sample pieces was examined both by microscope and visually. The effect of the test solutions against the inoculated fungi was graded by the following scale:
0 = excellent (no growth on the test substrate)
1 = good (traces of growth on the test substrate)
2 = moderate (1 to 10% of the surface of the substrate covered by growth)
3 = weak (10 to 30% of the surface of the substrate covered by growth)
4 = poor (30 to 70% of the surface of the substrate covered by growth)
5 = no protection at all (70 to 100% of the surface of the substrate covered by growth).

### RESULTS

The results are presented in the appended table 1. The table contains the species with the most growth on the wood pieces.

Almost all of the tested samples act excellently against blue stain growth. In the zero test, the capability of inhibiting blue stain growth was poor. No significant differences between the actual samples were obtained in this test.

**Table 1. The capability of the tested samples to inhibit growth of blue stain fungi.**

| Sample | Blue stain growth in 9 weeks | Growth on panel |
|---|---|---|
| 1. 0 test, water | mixed growth | 4 |
| 2. Solution 1 (reference solution 1) | clean surfaces | 0 |
| 3. Solution 2 (solution used in the invention) | clean surfaces | 0 |
| 4. CCA (reference solution 2) | clean surfaces | 0 |

### Example 2. Tests with pieces of wood by the box method (pieces of wood treated by immersion)

The capability of the wood-preserving solutions to inhibit the growth of wood-rotting and blue stain fungi was examined by the the box method. The pieces of wood used as test substrates were immersed in the sample solutions to be tested.

### SAMPLES

1. Water (zero test)
2. Solution 1 (reference solution 1)
   120 g/kg potassium formate + 24 g/kg Mg sulphate * 7H₂O + water pH 9 (measured directly from the solution)
3. Solution 2 (solution used in the invention)
   60 g/kg potassium formate + 60 g/kg potassium sorbate + 24 g/kg Mg sulphate * 7H₂O + water
   pH 9 (measured directly from the solution)
4. CCA impregnation liquid 2.2 wt-% (20 g/l = 2 wt-%) (reference solution 2)
   13.7 wt-% CuO
   34.2 wt-% CrO₃
   24.1 wt-% AsO₅
   28.0 wt-% H₂O

### METHOD

The test substrates used according to the method were panels of wood (pine) cut to pieces in the size of 10 x 6 x 1 cm. The pieces of wood were immersed in the test solutions for 16 h, after which the pieces were dried at +50°C for 16 h. A suspension of spores of moulds and blue stain fungi (in a mixed population of several species) was applied onto the dried sample pieces. Three parallel assays were made of each sample. After the inoculation, the sample pieces were placed in a closed test chamber containing water on the bottom. The pieces were hung in a rack above the water level. The temperature was controlled in such a way that the water was condensed onto the pieces but did not leach the pieces too strongly. The sample pieces were incubated in the chamber for 7 weeks.

After the incubation, the growth of fungi on the sample pieces was examined both by microscope and visually. The effect of the test solutions against the inoculated fungi was graded by the following scale:
0 = excellent (no growth on the test substrate)
1 = good (traces of growth on the test substrate)
2 = moderate (1 to 10% of the surface of the substrate covered by growth)
3 = weak (10 to 30% of the surface of the substrate covered by growth)
4 = poor (30 to 70% of the surface of the substrate covered by growth)
5 = no protection at all (70 to 100% of the surface of the substrate covered by growth).

### RESULTS

The results are presented in the appended table 2. The table contains the species with the most growth on the wood panels.

The solution 2 and CCA were capable of inhibiting the growth of moulds and blue stain fungi excellently; that is, all the wood surfaces remained clean. The solution 1 did not protect against the tested fungi at all; neither did water used as the zero sample. The treatment with CCA coloured the panel pieces greenish.

According to this test, the capability of solution 2 to inhibit the growth of moulds and blue stain fungi is in the same order as that of the CCA solution.

**Table 2. The capability of the tested samples to inhibit growth of wood-rotting and blue stain fungi.**

| Sample | Growth in 7 weeks | Growth on panel |
|---|---|---|
| 1. 0 test (water) | surface mould | 5 |
| 2. Solution 1 (reference solution 1) | surface mould | 5 |
| 3. Solution 2 (solution used in the invention) | clean surfaces | 0 |
| 4. CCA (reference solution 2) | clean surfaces | 0 |

### Example 3. Tests with pieces of wood by the box method (pieces of wood treated by brushing)

The capability of the wood-preservative compositions to inhibit the growth of wood-rotting and blue stain fungi was examined by the box method. The samples were brushed onto the wood pieces.

### SAMPLES

1. Water (zero test)
2. Solution 1 (reference solution 1)
   120 g/kg potassium formate + 24 g/kg Mg sulphate * 7H₂O + water pH 9 (measured directly from the solution)
3. Solution 2 (solution used in the invention)
   60 g/kg potassium formate + 60 g/kg potassium sorbate + 24 g/kg Mg sulphate * 7H₂O + water
   pH 9 (measured directly from the solution)
4. CCA impregnation liquid 2.2 wt-% (20 g/l = 2 wt-%) (reference solution 2)
   13.7 wt-% CuO
   34.2 wt-% CrO₃
   24.1 wt-% AsO₅
   28.0 wt-% H₂O

### METHOD

The test substrates used according to the method were panels of wood (pine) cut to pieces in the size of 10 x 6 x 1 cm. One surface and the sides of the wood pieces were brushed twice with the test solutions; the back surfaces were treated once with a commercial wood priming composition. The sample pieces were allowed to dry, and a suspension of spores of moulds and blue stain fungi (in a mixed population of several species) was applied onto them. Three parallel assays were made of each sample. After the grafting, the sample pieces were placed in a closed test chamber containing water on the bottom. The pieces were hung in a rack above the water level. The temperature was controlled in such a way that the water was condensed onto the pieces but did not leach the pieces too strongly. The sample pieces were incubated in the chamber for 7 weeks.
After the incubation, the growth of fungi on the sample pieces was examined both by microscope and visually. The effect of the test solutions against the inoculated fungi was graded by the following scale:
0 = excellent (no growth on the test substrate)
1 = good (traces of growth on the test substrate)
2 = moderate (1 to 10% of the surface of the substrate covered by growth)
3 = weak (10 to 30% of the surface of the substrate covered by growth)
4 = poor (30 to 70% of the surface of the substrate covered by growth)
5 = no protection at all (70 to 100% of the surface of the substrate covered by growth).

### RESULTS

The results are shown in Table 3. The table 3 contains the species with the most growth on the wood panels.

Only the solution 2 was capable of inhibiting the growth of moulds in addition to blue stain fungi in an excellent way; that is, all the wood surfaces remained clean. The inhibition capability of the other samples was poor and in the same order as that of the zero sample treated with plain water. Because CCA was not effective against the fungi in this test, the brushing of the surface of the wood with the sample was probably an insufficient treatment for the CCA to be absorbed into the wood, even though the CCA treatment coloured the wood pieces greenish. On the basis of the results, the solution 2 had been clearly absorbed into the wood better than the solution 1 and the CCA.

**Table 3. The capability of the tested samples to inhibit the growth of wood-rotting and blue stain fungi.**

| Sample | Growth in 7 weeks | Growth on panel |
|---|---|---|
| 1. 0 test (water) | surface mould, slightly blue stain | 4 |
| 2. Solution 1 (reference solution 1) | surface mould | 4 |
| 3. Solution 2 (solution used in the invention) | clean surfaces | 0 |
| 4. CCA (reference solution 2) | surface mould | 4 |

### Example 4. The capability of calcium (Ca) and potassium (K) formate as well as Solutions 1 and 2 to inhibit the growth of wood-rotting fungi / blue stain fungi / moulds on wood pieces in agar dishes

We examined the capability of aqueous solutions of Ca and K formate as well as solutions 1 and 2 to inhibit the growth of wood-rotting fungi / moulds / blue stain fungi on wood pieces in agar dishes.

### SAMPLES

1. Zero test, water
2. 5 wt-% K formate / water
3. 15 wt-% K formate / water
4. 25 wt-% K formate / water
5. 50 wt-% K formate / water
6. 5 wt-% Ca formate / water
7. 10 wt-% Ca formate / water
8. 12 wt-% Ca formate / water
9. Solution 1 (reference solution 1)
   120 g/kg potassium formate + 24 g/kg Mg sulphate * 7H₂O + water pH 9 (measured directly from the solution)
10. Solution 2 (solution used in the invention)
   60 g/kg potassium formate + 60 g/kg potassium sorbate + 24 g/kg Mg sulphate * 7H₂O + water
   pH 9 (measured directly from the solution)

### METHOD

The test substrates used were pieces of wood (pine) cut to the size of 3 x 2 x 0.5 cm. The wood pieces were immersed in a closed dish containing the test solution (40 °C) for two hours. After the treatment, the pieces were dried overnight at the temperature of 60°C. After this, the pieces were placed in malt agar dishes, and a suspension of spores of moulds / blue stain fungi /wood-rotting fungi was applied on them (by applying the filter paper method). Three parallel assays were made of each sample. The dishes were incubated at room temperature for 9 weeks.

After the incubation, the growth of the fungi on the sample pieces was examined both by microscope and visually.
0 = excellent (no growth on the test substrate)
1 = good (traces of growth on the test substrate)
2 = moderate (1 to 10% of the surface of the substrate covered by growth)
3 = weak (10 to 30% of the surface of the substrate covered by growth)
4 = poor (30 to 70% of the surface of the substrate covered by growth)
5 = no protection at all (70 to 100% of the surface of the substrate covered by growth).

### RESULTS

The results are presented in the appended table 4-6. The table contains the species with the most growth on the wood pieces.

The tested clean Ca and K formate samples and the reference solution 1 (solution 1) did not have a good effect against surface moulds. Even an untreated sample (zero test) was capable of moderate inhibition of mould growth. Similarly, a 50 wt-% aqueous solution of K formate inhibited the growth of surface moulds moderately; lower contents of K formate gave only poor protection against moulds. The 10 wt-% and 12 wt-% aqueous solutions of Ca formate have a poor effect against surface moulds; a 5 wt-% formate solution had a poor effect. The solution 2 of the invention provided very good protection against the growth of surface mould.

However, all the tested Ca and K formate solutions, the reference solution 1 (solution 1) and the solution 2 used in the invention, provided very good protection against the blue stain growth, that is, they inhibited the growth of fungi totally, except for 5 wt-% Ca formate with a moderate capability of inhibition.

Against wood-rotting fungi, too, all the K formate solutions (5 to 50 wt-%), the reference solution 1 (solution 1) and the solution 2 used in the invention had a very good effect. The 10 wt-% and 12 wt-% aqueous solutions of Ca formate provided good protection against the growth of wood-rotting fungi; the capability of the 5 wt-% solution was only poor.

**Table 4. The capability of the tested samples to inhibit the growth of surface mould.**

| Sample | Growth of surface mould in 9 weeks | Growth on panel |
|---|---|---|
| 1. 0 test | Penicillium expansum | 2 |
| 2. 5 % K formate / water | -"- | 4 |
| 3. 15% K formate / water | -"- | 4 |
| 4. 25% K formate / water | -"- | 4 |
| 5. 50% K formate / water | -"- | 2 |
| 6. 5% Ca formate / water | -"- | 4 |
| 7. 10% Ca formate / water | -"- | 3 |
| 8. 12% Ca formate / water | -"- | 3 |
| 9. Solution 1 (reference solution 1) | -"- | 4 |
| 10. Solution 2 (solution used in the invention) | clean surfaces | 0 |

**Table 5. The capability of the tested samples to inhibit the growth of blue stain fungi.**

| Sample | Blue stain growth in 9 weeks | Growth on panel |
|---|---|---|
| 1. 0 test | mixed growth | 4 |
| 2. 5% K formate / water | clean surfaces | 0 |
| 3. 15% K formate / water | clean surfaces | 0 |
| 4. 25% K formate / water | clean surfaces | 0 |
| 5. 50% K formate / water | clean surfaces | 0 |
| 6. 5% Ca formate / water | mixed growth | 2 |
| 7. 10% Ca formate / water | clean surfaces | 0 |
| 8. 12% Ca formate / water | clean surfaces | 0 |
| 9. Solution 1 (reference solution 1) | clean surfaces | 0 |
| 10. Solution 2 (solution used in the invention) | clean surfaces | 0 |

**Table 6. The capability of the tested samples to inhibit the growth of wood-rotting fungi.**

| Sample | Growth of wood-rotting fungi in 9 weeks | Growth on panel |
|---|---|---|
| 1. 0 test | mixed growth | 3 |
| 2. 5% K formate / water | clean surfaces | 0 |
| 3. 15% K formate / water | clean surfaces | 0 |
| 4. 25% K formate / water | clean surfaces | 0 |
| 5. 50% K formate / water | clean surfaces | 0 |
| 6. 5% Ca formate / water | mixed growth | 3 |
| 7. 10% Ca formate / water | mixed growth | 1 |
| 8. 12% Ca formate / water | mixed growth | 1 |
| 9. Solution 1 (reference solution 1) | clean surfaces | 0 |
| 10. Solution 2 (solution used in the invention) | clean surfaces | 0 |

### Example 5. Tests on water absorption (dimensional stability)

### METHOD

Pieces of wood (pine) were immersed in the following test solutions:
1. 500 g/kg potassium formate,
2. 250 g/kg potassium formate,
3. 500 g/kg potassium formate + 5 wt-% aluminium triformate * 3H₂O
4. 250 g/kg potassium formate 5 wt-% aluminium triformate * 3H₂O)
5. The solution 2 used in the invention (60 g/kg potassium formate + 60 g/kg potassium sorbate + 24 g/kg Mg sulphate *7H₂O + water, pH 9 measured directly from the solution) for 10 seconds, after which the wood pieces were dried in an incubator at the temperature of 105°C for 1 hour.

After the treatment with the wood-preservative composition, the wood pieces were placed in an incubator at a temperature of +30°C and a relative humidity of 70 RH.

### RESULTS

According to the test, the treatment of the wood pieces with all the tested potassium formate solutions reduced the absorption of water into wood significantly, when compared with untreated pine wood. The addition of the aluminium ion in the potassium formate solution reduced the absorption of water in the wood further.

### Example 6. Tests for preventing the cracking of wood (test of resistance to light in a QUV device)

Wood boards (pine) treated with the solution 1 (120 g/kg potassium formate + 24 g/kg Mg sulphate *7H₂O + water) and the solution 2 used in the invention (60 g/kg potassium sulphate + 60 g/kg potassium sorbate + 24 g/kg Mg sulphate *7H₂O + water) were subjected to a QUV test to examine the effect of light and a possible change of colour by light.

Further, to examine the performance of paint on wood treated with the solution 1 and the solution 2, the ends of the pieces were painted in such a way that one end was brushed with an oil paint and the other end with an acrylate. Both paints were applied twice. For reference, untreated wood (pine) was painted in the same way, and also this sample was subjected to the same tests as the boards treated with the solution.

### Cycle of QUV device

| Cond. 45 °C | 24 h | |
|---|---|---|
| UV/spray cycle repeated 48 times | UV 60°C (UVA 340 nm) | 2 h 30 min |
| | Spray (6-7 l/min, no UV) | 30 min |
| Back to start, for a total of 168 h | | |
| The cycles are repeated 12 times. Total time 2016 hours. | | |

### RESULTS

The tests showed that untreated wood had cracked significantly more than wood treated with formate (solution 1 and solution 2). Similarly, the oil paint cracks more under the cracking wood.

Visually evaluated, no change of colour occurred, compared with untreated wood.

When the composition used in the method according to the invention is used as a brushable composition for surface treatment, for example before painting or as a finishing paint, the alkalinity of the composition is advantageous in view of the paintability, because the alkaline composition neutralizes the acid components leaching from the wood and damaging the paintwork by causing blotchiness and other faults in the paintwork.

### Example 7. Inflammability

Inflammability and burning were tested by a test developed for this item. In the test, pieces of pine and spruce impregnated with the solution 1 (120 g/kg potassium formate + 24 g/kg Mg sulphate *7H₂O + water) and the solution 2 used in the invention (60 g/kg potassium sulphate + 60 g/kg potassium sorbate + 24 g/kg Mg sulphate *7H₂O + water), and respective reference pieces were exposed to a flame produced by gas. The dimensions of the pieces were 15 x 25 x 50 mm. The test pieces had been stabilized under the conditions of a laboratory room (T 20°C, RH 40%) for about three months. The flame was produced by a nozzle with the output of 1150 W (125 g/h). The pieces were placed at a distance of 120 mm from the flame for 15 seconds one by one.

### RESULTS

After the testing of a few test pieces, it was found that the test is very rigorous on wood. The wood pieces caught fire by the flame in about 8 to 10 seconds from the start. However, it was decided that all pieces be tested under identical conditions. It was found right after the burning time that, as a rule, the pieces impregnated with potassium formate (solution 1 and solution 2) quenched right after the end of the burning time, whereas the reference pieces continued to be on fire still after the burning time. No significant difference was found in the resistance to fire between the solution 1 and the solution 2 used in the invention.

### Example 8. Inhibition of the freezing of wood, and improvement of processability of frozen wood

Wood pieces (pine) treated by immersion with the solution 1 (120 g/kg potassium formate + 24 g/kg Mg sulphate *7H₂O + water) and the solution 2 used in the invention (60 g/kg potassium sulphate + 60 g/kg potassium sorbate + 24 g/kg Mg sulphate *7H₂O + water), and an untreated wood piece (pine) were immersed in tap water. The freezing of the wood piece was monitored visually. The freezing of the wood piece treated with the solutions 1 and 2 slowed down significantly, and even the melting of the frozen wood piece and/or the loosening of ice from the surface of the wood was significantly accelerated.

By the solution used in the invention, it possible to facilitate the treatment of wood under winter conditions where the processing of frozen wood (for example, melting, impregnation, planing, painting, etc.) is problematic and constitutes an extra cost item.

## Claims

1. A method for the treatment of wood, in which a treatment composition and wood are brought into a contact with each other and the treatment composition contains formate salt, **characterized in that** the treatment composition used is a composition which contains
1) the formate salt together with
2) sorbate salt and/or benzoate salt
dissolved in an aqueous liquid carrier,
said treatment composition being absorbed in the wood to preserve the wood simultaneously against surface mould and wood-rotting and blue stain fungi and insects.

2. The method according to claim 1, **characterized in that** said formate salt, sorbate salt or benzoate salt is an alkali metal salt, an alkaline-earth salt, an aluminium salt, or an ammonium salt.

3. The method according to claim 1 or 2, **characterized in that** the composition contains at least alkali metal formate, alkaline-earth formate, ammonium formate, or aluminium formate.

4. The method according to claim 2 or 3, **characterized in that** the composition contains at least alkali metal sorbate, possibly in combination with benzoate salt and/or propionate salt.

5. The method according to claim 4, **characterized in that** the formate salt is potassium formate and the sorbate salt is potassium sorbate, possibly in combination with benzoate salt and/or propionate salt.

6. The method according to any of the claims 3 to 5, **characterized in that** the formate salt is potassium formate in a content of 1 to 70 wt-%, preferably 2 to 40 wt-%.

7. The method according to any of the preceding claims, **characterized in that** the composition contains magnesium ions, such as magnesium formate or magnesium sulphate, or aluminium ions, such as aluminium triformate or aluminium sulphate, or silicate ions, such as sodium metasilicate.

8. The method according to claim 7, **characterized in that** the composition contains at least alkali metal formate, alkali metal sorbate and magnesium ions.

9. The method according to any of the preceding claims, **characterized in that** the composition contains fire retarding chemical based on phosphorus or nitrogen, such as, for example, diammonium hydrogen phosphate, mono-ammonium dihydrogen phosphate, ammonium polyphosphate, phosphonate, urea, urea phosphate, or a mixture of these.

10. The method according to any of the preceding claims, **characterized in that** before the treatment, the composition is diluted with water to a suitable concentration.

11. The method according to any of the preceding claims, **characterized in that** the treatment is carried out in a wood impregnation plant, for example by pressure impregnation.

12. The method according to any of the preceding claims 1 to 10, **characterized in that** the treatment is carried out as a surface treatment or painting for ready structures outdoors, such as outdoor furniture, piers, bridges, poles, and buildings.

13. Wood material, **characterized in that** it contains at least
1) formate salt and
2) sorbate salt and/or benzoate salt
absorbed in the wood as a result of a method of treatment according to any of the claims 1 to 9.

14. The wood material according to claim 13, **characterized in that** it also contains magnesium, aluminium and/or silicate ions as a result of the above-mentioned treatment.

## Patentansprüche

1. Verfahren zur Behandlung von Holz, wobei eine Behandlungszusammensetzung und Holz miteinander in Kontakt gebracht werden und die Behandlungszusammensetzung Formiatsalz enthält, **dadurch gekennzeichnet, dass** die verwendete Behandlungszusammensetzung eine Zusammensetzung ist, welche
1) das Formiatsalz zusammen mit
2) Sorbatsalz und/oder Benzoatsalz
gelöst in einem wässrigen flüssigen Träger enthält,
wobei die Behandlungszusammensetzung in dem Holz absorbiert wird, um das Holz gleichzeitig gegen Oberflächenschimmel und Holzfäule- und Bläuepilze und Insekten zu konservieren.

2. Verfahren nach Anspruch 1, **dadurch gekennzeichnet, dass** das Formiatsalz, Sorbatsalz oder Benzoatsalz ein Alkalimetallsalz, ein Erdalkalisalz, ein Aluminiumsalz oder ein Ammoniumsalz ist.

3. Verfahren nach Anspruch 1 oder 2, **dadurch gekennzeichnet, dass** die Zusammensetzung zumindest Alkalimetallformiat, Erdalkaliformiat, Ammoniumformiat oder Aluminiumformiat enthält.

4. Verfahren nach Anspruch 2 oder 3, **dadurch gekennzeichnet, dass** die Zusammensetzung zumindest Alkalimetallsorbat, möglicherweise in Kombination mit Benzoatsalz und/oder Propionatsalz, enthält.

5. Verfahren nach Anspruch 4, **dadurch gekennzeichnet, dass** das Formiatsalz Kaliumformiat ist und das Sorbatsalz Kaliumsorbat ist, möglicherweise in Kombination mit Benzoatsalz und/oder Propionatsalz.

6. Verfahren nach irgendeinem der Ansprüche 3 bis 5, **dadurch gekennzeichnet, dass** das Formiatsalz Kaliumformiat mit einem Gehalt von 1 bis 70 Gew.-%, vorzugsweise 2 bis 40 Gew.-%, ist.

7. Verfahren nach irgendeinem der vorangehenden Ansprüche, **dadurch gekennzeichnet, dass** die Zusammensetzung Magnesiumionen, beispielsweise Magnesiumformiat oder Magnesiumsulfat, oder Aluminiumionen, beispielsweise Aluminiumtriformiat oder Aluminiumsulfat, oder Silicationen, beispielsweise Natriummetasilicat, enthält.

8. Verfahren nach Anspruch 7, **dadurch gekennzeichnet, dass** die Zusammensetzung zumindest Alkalimetallformiat, Alkalimetallsorbat und Magnesiumionen enthält.

9. Verfahren nach irgendeinem der vorangehenden Ansprüche, **dadurch gekennzeichnet, dass** die Zusammensetzung eine flammenhemmende Chemikalie enthält, die auf Phosphor oder Stickstoff, beispielsweise Diammoniumhydrogenphosphat, Monoammoniumdihydrogenphosphat, Ammoniumpolyphosphat, Phosphonat, Harnstoff, Harnstoffphosphat oder einer Mischung von diesen, basiert.

10. Verfahren nach irgendeinem der vorangehenden Ansprüche, **dadurch gekennzeichnet, dass** vor der Behandlung die Zusammensetzung mit Wasser auf eine geeignete Konzentration verdünnt wird.

11. Verfahren nach irgendeinem der vorangehenden Ansprüche, **dadurch gekennzeichnet, dass** die Behandlung in einer Holzimprägnierungsanlage, beispielsweise durch Druckimprägnierung, durchgeführt wird.

12. Verfahren nach irgendeinem der vorangehenden Ansprüche 1 bis 10, **dadurch gekennzeichnet, dass** die Behandlung als Oberflächenbehandlung oder Anstrich für fertige Strukturen im Freien, beispielsweise Außenmöbel, Piere, Brücken, Pfähle und Gebäude, durchgeführt wird.

13. Holzmaterial, **dadurch gekennzeichnet, dass** es zumindest
1) Formiatsalz und
2) Sorbatsalz und/oder Benzoatsalz
absorbiert in dem Holz infolge eines Behandlungsverfahrens nach irgendeinem der Ansprüche 1 bis 9 enthält.

14. Holzmaterial nach Anspruch 13, **dadurch gekennzeichnet, dass** es auch Magnesium-, Aluminium- und/oder Silicationen infolge der oben genannten Behandlung enthält.

## Revendications

1. Procédé pour le traitement du bois, dans lequel on met en contact une composition de traitement et le bois, et la composition de traitement contient un sel formiate, **caractérisé en ce que** la composition de traitement utilisée est une composition qui contient :
**1)** le sel formiate conjointement avec
2) un sel sorbate et/ou un sel benzoate
dissous dans un support liquide aqueux,
ladite composition de traitement étant absorbée dans le bois pour préserver le bois simultanément contre la moisissure en surface et contre les insectes et les champignons du bleuissement et de la pourriture du bois.

2. Procédé selon la revendication 1, **caractérisé en ce que** ledit sel formiate, ledit sel sorbate ou ledit sel benzoate représente un sel de métal alcalin, un sel de métal alcalino-terreux, un sel d'aluminium ou un sel d'ammonium.

3. Procédé selon la revendication 1 ou 2, **caractérisé en ce que** la composition contient au moins un formiate de métal alcalin, un formiate de métal alcalino-terreux, un formiate d'ammonium ou un formiate d'aluminium.

4. Procédé selon la revendication 2 ou 3, **caractérisé en ce que** la composition contient au moins un sorbate de métal alcalin, le cas échéant en combinaison avec un sel benzoate et/ou un sel propionate.

5. Procédé selon la revendication 4, **caractérisé en ce que** le sel formiate représente du formiate de potassium et le sel sorbate représente du sorbate de potassium, le cas échéant en combinaison avec un sel benzoate et/ou un sel propionate.

6. Procédé selon l'une quelconque des revendications 3 à 5, **caractérisé en ce que** le sel formiate représente du formiate de potassium en une teneur de 1 à 70 % en poids, de préférence de 2 à 40 % en poids.

7. Procédé selon l'une quelconque des revendications précédentes, **caractérisé en ce que** la composition contient des ions de magnésium, tels que le formiate de magnésium ou le sulfate de magnésium, ou des ions d'aluminium, tels que le triformiate d'aluminium ou le sulfate d'aluminium, ou des ions de silicate, tels que le métasilicate de sodium.

8. Procédé selon la revendication 7, **caractérisé en ce que** la composition contient au moins un formiate de métal alcalin, un sorbate de métal alcalin et des ions de magnésium.

9. Procédé selon l'une quelconque des revendications précédentes, **caractérisé en ce que** la composition contient un produit chimique ignifuge à base de phosphore ou d'azote, tel que par exemple l'hydrogénophosphate de diammonium, le dihydrogénophosphate de mono-ammonium, le polyphosphate d'ammonium, un phosphonate, de l'urée, un phosphate d'urée, ou un de leurs mélanges.

10. Procédé selon l'une quelconque des revendications précédentes, **caractérisé en ce que**, avant le traitement, la composition est diluée avec de l'eau jusqu'à une concentration appropriée.

11. Procédé selon l'une quelconque des revendications précédentes, **caractérisé en ce que** le traitement est mis en oeuvre dans une installation d'imprégnation du bois, par exemple par imprégnation sous pression.

12. Procédé selon l'une quelconque des revendications 1 à 10, **caractérisé en ce que** le traitement est mis en oeuvre sous la forme d'un traitement de surface ou d'une peinture de structures prêtes à l'emploi à l'extérieur, telles que du mobilier d'extérieur, des digues, des ponts, des mâts et des bâtiments.

13. Matériau en bois, **caractérisé en ce qu'**il contient au moins
1) un sel formiate, et
2) un sel sorbate et/ou un sel benzoate
absorbés dans le bois suite à un procédé de traitement selon l'une quelconque des revendications 1 à 9.

14. Matériau en bois selon la revendication 13, **caractérisé en ce qu'**il contient également des ions de magnésium, d'aluminium et/ou de silicate, comme conséquence du traitement mentionné ci-dessus.
